# EUROPÄISCHE PATENTSCHRIFT

(11) **EP 3 585 937 B1**
(45) Veröffentlichungstag und Bekanntmachung des Hinweises auf die Patenterteilung: **04.10.2023**
(21) Anmeldenummer: 18705930.8
(22) Anmeldetag: 19.02.2018
(51) Int. Cl.: D07B 5/00

(54) **SCHLINGENGEBILDE, VERFAHREN ZUR HERSTELLUNG EINES SCHLINGENGEBILDES UND ELEMENT**
LOOP STRUCTURE, METHOD FOR PRODUCING A LOOP STRUCTURE AND ELEMENT
COMPLEXE BOUCLÉ, PROCÉDÉ DE FABRICATION D'UN COMPLEXE BOUCLÉ ET ÉLÉMENT

(30) Priorität: 21.02.2017 DE 102017103561
(43) Veröffentlichungstag der Anmeldung: 01.01.2020
(73) Patentinhaber: Freistaat Bayern Vertreten Durch Hochschule Hof, Institut Für Materialwissenschaften, 95028 Hof/Saale (DE)
(72) Erfinder: FICKER, Frank, 08626 Tiefenbrunn (DE); KUEGEL, Nathalie, 27755 Delmenhorst (DE); LUFT, Alexandra, 95030 Hof (DE); MIKSCH, Roxana, 63674 Altenstadt (DE); SCHOEN, Daniela, 95028 Hof (DE)
(74) Vertreter: Canzler & Bergmeier Patentanwälte Partnerschaft mbB
(86) Internationale Anmeldenummer: PCT/EP2018/054028
(87) Internationale Veröffentlichungsnummer: WO 2018/153813

(56) Entgegenhaltungen:
- EP-A2- 2 594 428
- DE-A1-102015 008 904
- JP-A- 2009 001 360
- JP-U- S5 746 583
- US-B1- 8 689 534

## Beschreibung

Die vorliegende Erfindung betrifft ein Schlingengebilde aufweisend mindestens zwei Elemente, wobei jedes Element mindestens eine Schlinge aufweist, die mit mindestens einer Schlinge eines anderen Elements ineinander greift, ein Verfahren zur Herstellung eines solchen Schlingengebildes sowie ein Element.

Die wohl am häufigsten auftretende und verwendete Form von Schlingengebilden ist die Kette. Ketten mit Gliedern aus Metallen, beispielsweise Eisen, sind schon seit mehreren tausend Jahren bekannt. Sie werden dabei für vielfältigste Zwecke eingesetzt, so beispielsweise zum Heben oder zum Ziehen von Lasten, zum Verzurren von Ladegut, aber auch unbelastet beispielsweise zur Absperrung oder zur Dekoration.

Nachteilig an Ketten mit Gliedern aus Metall ist beziehungsweise kann sein, dass sie ein hohes Gewicht aufweisen, hart sind, wobei sie andere Gegenstände beschädigen können, und korrosionsanfällig sowie elektrisch leitend sind.

Textile Gliederketten, die ebenfalls hohe Zugkräfte aufnehmen können, weisen die genannten Nachteile nicht auf. Eine solche textile Gliederkette wird beispielsweise in der WO 00/17085 offenbart. Dort bestehen die einzelnen Schlingen aus einem flexiblen Material mit zwei Enden, wobei die Enden einander überlappen und zusammengenäht sind.

Nachteilig an dieser Lösung ist jedoch, dass jede der Schlingen einzeln genäht werden muss, was einen sehr hohen Produktionsaufwand bedeutet.

JP 2009-1360 A offenbart ein Schlingengebilde in Form einer Kette, wobei die einzelnen Schlingen in Form von biegsamen Elementen mit einem Augspleiss vorliegen. Der Augspleiss ist durch umschlagen und verspleißen eines Seilendes erzeugt. Die jeweiligen Augen der einzelnen Elemente greifen ineinander.

Bei JPS 57-46583 U ist eine Kette offenbart, bei welcher ein einzelnes Kettenglied durch Spleißen eines Seils erzeugt wurde.

US 8,689,534 B1 offenbart eine Seilkonstruktion, die aus einer Vielzahl von Verbindungselementen besteht, die jeweils ein erstes und ein zweites Ende aufweisen. Die beiden Enden sind mit Verbindungselementen miteinander verbunden und bilden dadurch ein Kettenglied.

Alle diese Verbindungen von Seilenden sind aufwändig in der Herstellung und weisen das Risiko auf, dass sich die Verbindung bei Eintragung einer Last löst.

Aus der DE 10 2015 008 904 A1 ist es bekannt, dass ein Seil insbesondere eine schlitzförmige Durchführung in ihrem Längsbereich aufweist. Das Seil ist als geflochtene Struktur ausgeführt und im Bereich der schlitzförmigen Durchführungen in diese Struktur ist ein Durchgangsbereich flechttechnisch eingearbeitet. Dabei entstehen zwei voneinander beabstandete Stege des Seils.

EP 2 594 428 A2 beschreibt eine Befestigungsschnur, die eine Vielzahl von Schlitzabschnitten und eine Vielzahl von Verbindungsabschnitten aufweist. Benachbarte Schlitzabschnitte sind durch einen der Verbindungsabschnitte getrennt. Jeder Schlitzabschnitt umfasst einen oberen Teil und einen unteren Teil. Der Schlitzabschnitt weist einen oberen Abschnitt und einen unteren Abschnitt auf, welche eine Schlaufe bilden. Die geschlitzte Schnur umfasst eine Vielzahl von Kettfäden, einen ersten Satz von Schussfäden und einen zweiten Satz von Schussfäden. Die Kettfäden werden unter Verwendung des ersten Satzes von Schussfäden und des zweiten Satzes von Schussfäden miteinander verwoben, um die flachen Abschnitte der Schnur zu bilden. Ein Teil der Kettfäden wird mit dem ersten Satz von Schussfäden verwebt, um den oberen Teil des Schlitzabschnitts zu bilden, während der Rest der Kettfäden mit dem zweiten Satz von Schussfäden verwebt wird, um den unteren Teil des Schlitzabschnitts zu bilden.

Die Herstellung solcher Seile mit Öffnungen ist sehr aufwändig. Ein Schlingengebilde aus mehreren Seilen kann damit nicht hergestellt werden.

Aufgabe der vorliegenden Erfindung ist es somit, ein Schlingengebilde zu schaffen, das sich mit geringerem Produktionsaufwand herstellen lässt.

Die Aufgabe wird gelöst durch ein Schlingengebilde und ein Verfahren zur Herstellung eines Schlingengebildes mit den Merkmalen der unabhängigen Patentansprüche.

Vorgeschlagen wird ein Schlingengebilde mit mindestens zwei Elementen. Dabei weist jedes Element mindestens eine Schlinge auf, die mit mindestens einer Schlinge eines anderen Elements ineinander greift. Das einfachste Schlingengebilde umfasst also zwei Elemente mit je einer Schlinge, wobei die beiden Schlingen ineinandergreifen. Es sind aber auch Gliederketten, Strickleitern, Netze und hoch komplexe Schlingengebilde im Rahmen des Oberbegriffs denkbar.

Erfindungsgemäß weist jedes der Elemente mehrere Stränge auf, die zumindest teilweise aus biegsamem Material bestehen. Es ist also auch möglich, dass einige der Stränge aus einem unbiegsamen Material sind. Dabei sind die Stränge eines Elements zu mindestens zwei in Längsrichtung des Elements voneinander beabstandeten Stegen textilartig verarbeitet. Unter textilartigem Verarbeiten wird insbesondere Verflechten, Verweben, Verwirken und/oder Verstricken verstanden, es sind aber auch andere Verfahren wie Verhäkeln oder Verknüpfen denkbar. Sofern das biegsame Material textilartig verarbeitbar, also insbesondere flechtbar, webbar, wirkbar und/oder strickbar, ist, ist es also auch für Schlingengebilde verwendbar. Welches Material tatsächlich verwendet wird kommt auf die Anforderungen des Schlingengebildes an. Die Stränge eines Elements sind zu voneinander beabstandeten Stegen textilartig verarbeitet. Die Länge der Stege kann dabei abhängig von der Anwendung weitgehend frei gewählt werden. Sie können sogar so kurz sein, dass ein Steg im Wesentlich nur eine einzelne Überkreuzung von einigen oder mehreren der Stränge ist. Auch das textilartige Arbeitsmuster, also insbesondere Flecht-, Web-, Wirk- und/oder Strickmuster, kann weitgehend frei gewählt werden. Je nach Anwendung können beispielsweise flache oder runde textilartige Arbeitsmuster von Vorteil sein. Es ist auch möglich, dass einige der Stränge, beispielsweise im Kern, an sich textilartig unverarbeitet - also im Wesentlichen gerade - mitlaufen.

Der Übergang vom Steg auf die Schenkel (und umgekehrt wieder zurück) kann so durchgeführt werden, dass bis zu einem Übergangspunkt alle Stränge zum Steg textilartig verarbeitet werden und ab diesem Übergangspunkt jeweils eine Hälfte der Stränge zu einem Schenkel, bzw. jeweils ein Bruchteil der Stränge zu mehreren Schenkeln textilartig verarbeitet wird. Dann tritt aber am Übergangspunkt zwischen den Schenkeln ein Loch auf, das auch die Zugbelastbarkeit vermindert. Erfindungsgemäß ist zwischen benachbarten Stegen und Schenkeln eine Übergangszone vorgesehen, die von einem textilartigen Arbeitsmuster der Stege verschieden ist, in der sich aber Stränge der Schenkel überkreuzen und/oder miteinander verbinden. Durch die zusätzlichen Überkreuzungen und/oder Verbindungen wird das genannte Loch geschlossen, was auch die Zugbelastbarkeit des Elements erhöht.

Abschnittsweise sind die Stränge geteilt und jeder Teil ist zu einem Schenkel textilartig verarbeitet. Dabei ist die Teilung in zwei Teile die einfachste und meist auch hinreichend, es ist aber auch eine Teilung in mehr als zwei Teile denkbar. Des Weiteren müssen die Teile auch nicht gleich groß sein, wobei dies in den meisten Anwendungen der Fall sein dürfte. Jeder Teil der Stränge ist zu einem Schenkel textilartig verarbeitet. Zwei Stege sind dabei durch zumindest zwei Schenkel miteinander verbunden. In einem Element ist also mindestens eine Folge Steg - Schenkel - Steg vorhanden. Die im Steg textilartig verarbeiteten Stränge teilen sich dabei in den Schenkeln auf und kommen im nächsten Steg wieder zusammen. Die Schenkel bilden dabei die Schlingen der Elemente.

Das erfindungsgemäße Schlingengebilde lässt sich beispielsweise auf einer Flechtmaschine flechten oder einer Webmaschine weben, wodurch es sich mit geringem Produktionsaufwand herstellen lässt.

Vorteilhafterweise sind die Stränge an den Enden der Elemente miteinander verbunden. So können sie gegen unbeabsichtigtes Aufgehen bzw. Entflechten geschützt werden. Je nach biegsamem Material bietet es sich dabei an, die Enden zu kleben, verschweißen, verknoten, spleißen, vernähen und/oder verschmelzen.

Von Vorteil ist es auch, wenn die Schenkel zu einem Schlauch textilartig gearbeitet sind. Vorzugsweise sind dann die an den Enden der Elemente befindlichen Stege und/oder Schenkel in einen oder mehrere Schenkel hineingestülpt. Dadurch werden die Elemente an ihren Enden kompakter, da keine Stege bzw. Schenkel mehr hervorstehen. Darüber hinaus wird durch die zusätzliche Reibung des hineingestülpten Steges bzw. Schenkels an der Innenseite des Schenkels die Zugbelastbarkeit des Elements erhöht.

Je nach Anwendungszweck des Schlingengebildes ist es von Vorteil, wenn die Stränge Naturfasern, Kunstfasern, Glasfasern, Kohlefasern, Metallfasern, Kunststoffdrähte und/oder Metalldrähte aufweisen. Hierbei sind verschiedene Eigenschaften wie beispielsweise gewünschte Zugbelastbarkeit, Dichte, Beständigkeit gegen Umwelteinflüsse oder elektrische Leitfähigkeit von Interesse. Es ist auch möglich, verschiedene Stränge textilartig zu verarbeiten.

In einer vorteilhaften Weiterbildung ist das Schlingengebilde eine Gliederkette. Dabei weist jedes Element genau zwei Stege und mindestens zwei Schenkel auf. Zwei der Schenkel verbinden dabei die Stege miteinander und bilden eine Schlinge. Bis auf die Schlingen des ersten und des letzten Elements der Gliederkette greifen alle Schlingen mit jeweils zwei weiteren Schlingen ineinander, wie es für eine Gliederkette üblich ist. Eine Gliederkette ist dabei mit geringem Produktionsaufwand und in so gut wie beliebiger Länge herstellbar und gleichzeitig vielseitig einsetzbar, beispielsweise als Ersatz für andere Gliederketten.

Das Schlingengebilde ist gemäß der vorangegangenen Beschreibung ausgebildet, wobei die genannten Merkmale einzeln oder in beliebiger Kombination vorhanden sein können.

Des Weiteren wird ein Verfahren zur Herstellung eines wie oben beschriebenen Schlingengebildes vorgeschlagen. Erfindungsgemäß werden aus mehreren Strängen, zumindest teilweise aus biegsamem Material, zumindest zwei Ursprungselemente textilartig gearbeitet. Unter textilartigem Verarbeiten wird dabei insbesondere Verflechten, Verweben, Verwirken und/oder Verstricken verstanden, es sind aber auch andere Verfahren wie Verhäkeln oder Verknüpfen denkbar. Die Ursprungselemente weisen abwechselnd einen Steg, mindestens zwei Schenkel und wieder einen Steg auf, wobei sich diese Abfolge beliebig oft wiederholen kann. Im Steg sind dabei die dem Ursprungselement zugeordneten Stränge textilartig verarbeitet, wobei das textilartige Arbeitsmuster weitgehend frei gewählt werden kann. Je nach Anwendung können beispielsweise flache oder runde textilartige Arbeitsmuster von Vorteil sein. Auch die Länge des Stegs kann abhängig von der Anwendung weitgehend frei gewählt werden. Der Steg kann sogar so kurz sein, dass er im Wesentlich nur eine einzelne Überkreuzung von einigen oder mehreren der Stränge ist. Des Weiteren ist es möglich, dass einige der Stränge, beispielsweise im Kern, an sich textilartig unverarbeitet - also im Wesentlichen gerade - mitlaufen.

Erfindungsgemäß wird zwischen den Stegen und Schenkeln eine Übergangszone textilartig gearbeitet, die sich vom textilartigen Arbeitsmuster der Stege unterscheidet, in der sich aber Stränge der Schenkel überkreuzen und/oder miteinander verbinden. So wird ein Loch zwischen den Schenkeln vermieden, das auftreten kann, wenn diese Übergangszone fehlt. Ohne dieses Loch ist die Zugbelastbarkeit des Elements erhöht.

Abschnittsweise sind die Stränge geteilt, wobei die Schenkel jeweils einen Teil der Stränge umfassen. Auch in den Schenkeln ist der Teil der Stränge nach einem weitgehend frei wählbaren textilartigen Arbeitsmuster miteinander textilartig verarbeitet, wobei auch hier einige der Stränge, beispielsweise im Kern, an sich textilartig unverarbeitet mitlaufen können. Die Schenkel bilden dabei Schlingen und Schlingen der verschiedenen Ursprungselemente greifen ineinander. Das textilartige Arbeiten lässt sich automatisieren und mit relativ geringem Produktionsaufwand betreiben.

Vorteilhafterweise werden einige oder alle Stege und/oder Schenkel der Ursprungselemente durchtrennt um einzelne Elemente des Schlingengebildes zu erhalten. Das Durchtrennen kann dabei insbesondere durch Schneiden und/oder Schmelzen, wie etwa beim Heißschneiden, durchgeführt werden. Welche Stege bzw. Schenkel durchtrennt werden hängt vom gewünschten Schlingengebilde ab. Es kann aber auch Ursprungselemente geben, bei denen weder Stege noch Schenkel durchtrennt werden.

Von Vorteil ist es auch, wenn die Ursprungselemente nach dem textilartigen Arbeiten und vor dem Durchtrennen gestreckt werden, wodurch das Durchtrennen präziser erfolgen kann.

Es ist auch vorteilhaft, wenn die Stränge an den Enden der Elemente miteinander verbunden werden. So werden sie gegen unbeabsichtigtes Aufgehen bzw. Entflechten geschützt. Je nach biegsamem Material bietet es sich dabei an, die Enden zu kleben, verschweißen, verknoten, spleißen, vernähen und/oder verschmelzen.

Vorteilhafterweise werden die Schenkel zu einem Schlauch textilartig gearbeitet und vorzugsweise werden nach dem Durchtrennen der Stege und nach dem Verbinden der Stränge die an den Enden der Elemente befindlichen Stege und/oder Schenkel in einen oder mehrere Schenkel hineingestülpt. Dadurch werden die Elemente an ihren Enden kompakter, da keine Stege bzw. Schenkel mehr hervorstehen. Darüber hinaus wird durch die zusätzliche Reibung des hineingestülpten Steges bzw. Schenkels an der Innenseite des Schenkels die Zugbelastbarkeit des Elements erhöht.

Je nach Anwendungszweck des Schlingengebildes ist es von Vorteil, wenn die Stränge Naturfasern, Kunstfasern, Glasfasern, Kohlefasern, Metallfasern, Kunststoffdrähte und/oder Metalldrähte aufweisen. Hierbei sind verschiedene Eigenschaften wie beispielsweise gewünschte Zugbelastbarkeit, Dichte, Beständigkeit gegen Umwelteinflüsse oder elektrische Leitfähigkeit von Interesse.

In einer vorteilhaften Weiterbildung der Erfindung werden genau zwei Ursprungselemente textilartig gearbeitet, wobei zumindest einige der Schlingen der Ursprungselemente abwechselnd ineinandergreifen. Die Ursprungselemente werden jeweils zwischen zwei der ineinander greifenden Schlingen getrennt, so dass eine Gliederkette entsteht. Es wird also mit geringem Produktionsaufwand eine sehr vielseitig einsetzbare Gliederkette hergestellt.

Schließlich ist es von Vorteil, wenn das textilartige Arbeiten mit einer Schmaltextilien herstellenden Maschine durchgeführt wird. Es wird also insbesondere mit einem Variationsflechter, einem 3D-Flechter, einer Bandwebmaschine, einer Wirkmaschine und/oder einer Strickmaschine durchgeführt. Beispielsweise kann ein Variationsflechter die Klöppel vielfältig bewegen und so programmiert werden, dass die Ursprungselemente mit ineinander greifenden Schlingen automatisch geflochten werden. Dabei muss die Größe des Variationsflechters an die Komplexität des zu flechtenden Schlingengebildes angepasst sein.

Das Verfahren zur Herstellung des Schlingengebildes wird gemäß der vorangegangenen Beschreibung durchgeführt, wobei die genannten Merkmale einzeln oder in beliebiger Kombination durchgeführt werden können.

Ein erfindungsgemäßes Element, zur Herstellung eines zuvor beschriebenen Schlingengebildes weist eine Schlinge und mehrere Stränge auf, die zumindest teilweise aus biegsamem Material hergestellt sind. Die Stränge des Elements sind zu mindestens zwei in Längsrichtung des Elements voneinander beabstandeten Stegen textilartig verarbeitet, insbesondere verflochten, verwebt, verwirkt und/oder verstrickt. Die Stränge sind außerdem abschnittsweise geteilt und jeder Teil ist zu einem Schenkel textilartig verarbeitet, wobei zumindest zwei Schenkel zwei der Stege miteinander verbinden und die Schlinge aus den Schenkeln gebildet ist. Das erfindungsgemäße Element kann beispielsweise als Ring verwendet werden, welcher vielfältige Einsatzmöglichkeiten hat.

Zwischen benachbarten Stegen und Schenkeln ist eine Übergangszone vorgesehen, die von einem textilartigen Arbeitsmuster, insbesondere Flechtmuster, Webmuster, Wirkmuster und/oder Strickmuster, der Stege verschieden ist, in der sich aber Stränge der Schenkel überkreuzen und/oder miteinander verbinden. Damit wird vermieden, dass zwischen den Schenkeln ein Loch entsteht. Der Ring wird damit noch stabiler.

Die Stränge sind vorzugsweise an den Enden der Elemente miteinander verbunden, insbesondere geklebt, verschweißt, verknotet, gespleißt, vernäht und/oder verschmolzen. Damit sind die Enden geschützt und es wird vorteilhafterweise verhindert, dass die textile Verbindung der Stränge bei Verwendung des Elements aufgelöst wird.

Die Schenkel sind vorzugsweise zu einem Schlauch textilartig gearbeitet und die an den Enden des Elements befindlichen Stege und/oder Schenkel sind vorzugsweise in einen oder mehrere Schenkel hineingestülpt. Damit ergibt sich das Erscheinungsbild eines geschlossenen Rings, der an den Enden der Stränge vor Beschädigung geschützt ist.

Die Stränge weisen vorzugsweise Naturfasern, Kunstfasern, Glasfasern, Kohlefasern, Metallfasern, Kunststoffdrähte und/oder Metalldrähte auf. Damit kann auf den vorgesehenen Einsatzzweck des Elements besonders gut eingegangen werden.

Weitere Vorteile der Erfindung sind in den nachfolgenden Ausführungsbeispielen beschrieben. Es zeigt:
- **Figur 1**: eine schematische Ansicht eines Elements eines Schlingengebildes,
- **Figur 2**: eine schematische Ansicht eines Schnitts durch ein weiteres Element eines Schlingengebildes,
- **Figur 3a**: eine schematische Ansicht eines Schnitts durch ein weiteres Element eines Schlingengebildes,
- **Figur 3b**: eine schematische Ansicht eines Schnitts durch das Element des Schlingengebildes aus Figur 3a,
- **Figur 4**: eine schematische Ansicht eines weiteren Elements eines Schlingengebildes,
- **Figur 5a**: eine schematische Ansicht eines Ausschnitts eines Schlingengebildes,
- **Figur 5b**: eine weitere schematische Ansicht eines Ausschnitts des Schlingengebildes aus Figur 5a,
- **Figur 6a**: eine schematische Ansicht eines Ausschnitts eines weiteren Schlingengebildes,
- **Figur 6b**: eine weitere schematische Ansicht eines Ausschnitts des Schlingengebildes aus Figur 6a,
- **Figur 6c**: eine weitere schematische Ansicht eines Ausschnitts des Schlingengebildes aus Figur 6a,
- **Figur 7a**: eine schematische Ansicht eines Ausschnitts eines weiteren Schlingengebildes,
- **Figur 7b**: eine weitere schematische Ansicht eines Ausschnitts des Schlingengebildes aus Figur 7a,
- **Figur 7c**: eine weitere schematische Ansicht eines Ausschnitts des Schlingengebildes aus Figur 7a,
- **Figur 7d**: eine weitere schematische Ansicht eines Ausschnitts des Schlingengebildes aus Figur 7a,
- **Figur 8a**: eine schematische Ansicht eines Ausschnitts eines weiteren Schlingengebildes,
- **Figur 8b**: eine weitere schematische Ansicht eines Ausschnitts des Schlingengebildes aus Figur 8a und
- **Figur 9**: eine schematische Ansicht eines weiteren Schlingengebildes.

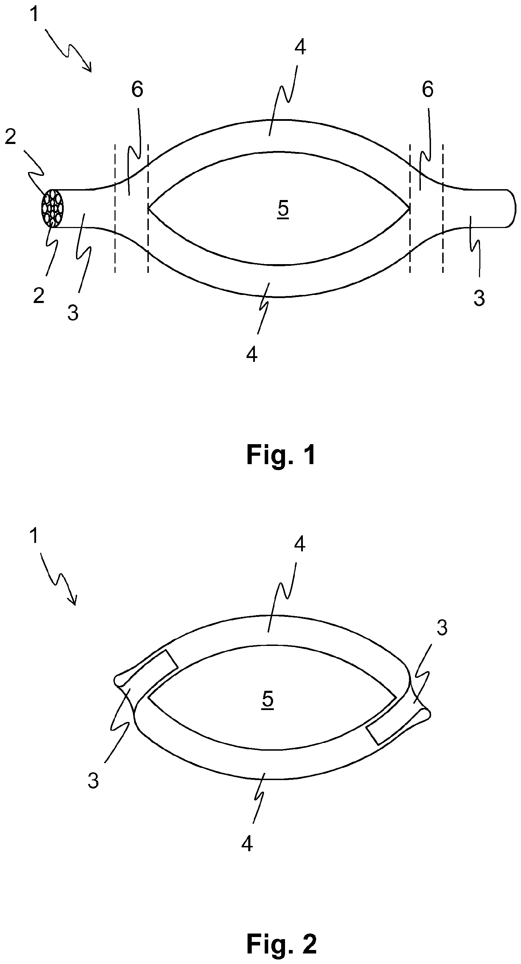

Figur 1 zeigt eine schematische Ansicht eines Elements 1 eines Schlingengebildes. Die Stränge 2, aus denen das Element 1 geflochten ist, sind dabei am einen Ende des Elements 1 angedeutet. Das Element 1 kann aber auch gewebt, gewirkt, gestrickt, gehäkelt und/oder geknüpft sein. Der Übersichtlichkeit halber wurden nur zwei der Stränge 2 mit einem Bezugszeichen versehen. Vorzugsweise sind diese Stränge 2 dabei an den Enden des Elements 1 miteinander verbunden, so dass die Enden nicht aufgehen bzw. sich entflechten.

Das Element 1 weist zwei Stege 3 auf, die in Längsrichtung des Elements 1 voneinander beabstandet sind. In den Stegen sind alle Stränge 2 des Elements 1 verflochten. Die gestrichelten Linien zeigen dabei nur die Abgrenzung der einzelnen Bereiche des Elements 1 an.

In zwei Schenkeln 4 des Elements 1, die die beiden Stege 3 miteinander verbinden, sind jeweils nur die Hälfte der Stränge 2 verflochten. Die Schenkel 4 schließen dabei eine Schlinge 5 ein.

In optionalen Übergangszonen 6, die jeweils zwischen den Stegen 3 und Schenkeln 4 angeordnet sind, überkreuzen sich Stränge 2, die den einzelnen Schenkeln 4 zugeordnet sind. Das Flechtmuster in den Übergangszonen 6 unterscheidet sich allerdings vom Flechtmuster in den Stegen 3. Dadurch wird das Auftreten eines Lochs an der Stelle, an der der Steg in die Schenkel übergeht, vermieden.

Bei der nachfolgenden Beschreibung alternativer Ausführungsbeispiele werden für Merkmale, die im Vergleich zu anderen Ausführungsbeispielen in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

Figur 2 zeigt einen Schnitt durch ein Element 1 mit einer Schlinge 5. Beim Element 1 der Figur 2 wurden die Schenkel 4 schlauchförmig geflochten. Nachdem die Stränge 2 an den Enden des Elements 1 miteinander verbunden wurden, wurden die Stege 3 jeweils in einen Schenkel 4 hineingestülpt. In Figur 2 wurden dabei die beiden Stege 3 in unterschiedliche Schenkel 4 hineingestülpt, sie können aber auch in den gleichen Schenkel 4 hineingestülpt werden. Durch das Hineinstülpen der Stege 3 in die Schenkel 4 wird das Element 1 kompakter und durch die zusätzliche Reibung zwischen dem Steg 3 und der Innenseite der Schenkel 4 wird auch die Zugbelastbarkeit des Elements 1 erhöht.

Figur 2b zeigt ein weiteres Ausführungsbeispiel eines Elements 1, bei dem jeder der Stege 3 in zwei Schenkel 4 hineingestülpt wurde. So ergibt sich ein besonders symmetrisches Element 1.

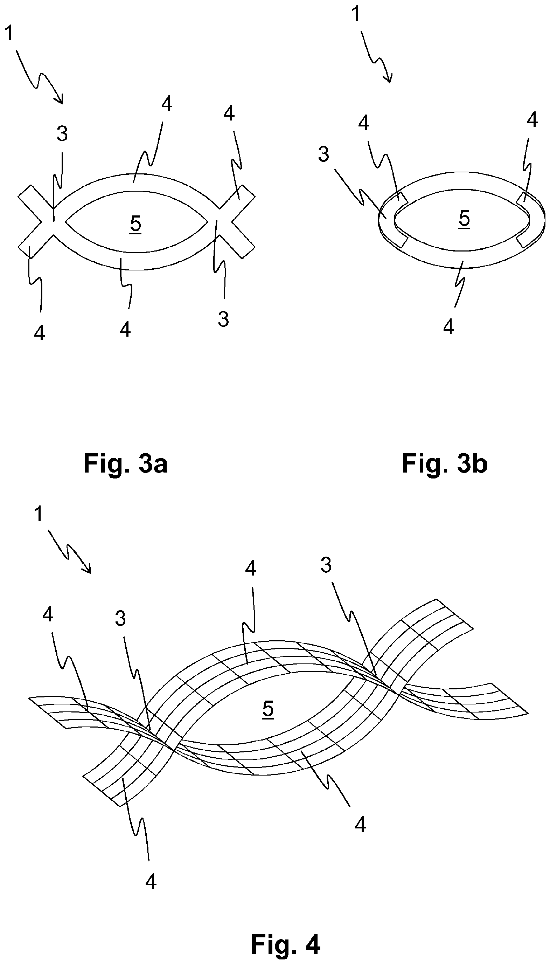

Bei dem in Figur 3a gezeigten Ausführungsbeispiel eines Elements 1 sind die Stege 3 sehr kurz geflochten. Sie sind gewissermaßen lediglich eine Überkreuzung der Schenkel 4, die sich jeweils links und rechts des Stegs 3 befinden.

Werden nun die freien Schenkel 4 in die Schenkel 4, die die Schlinge 5 bilden, hineingestülpt, ergibt sich skizziert dargestellt das in Figur 3b gezeigte Element 1.

Das Element 1 des in Figur 4 gezeigten Ausführungsbeispiels ist gewebt. Auch hier ist der Steg 3 lediglich eine Überkreuzung der Schenkel 4.

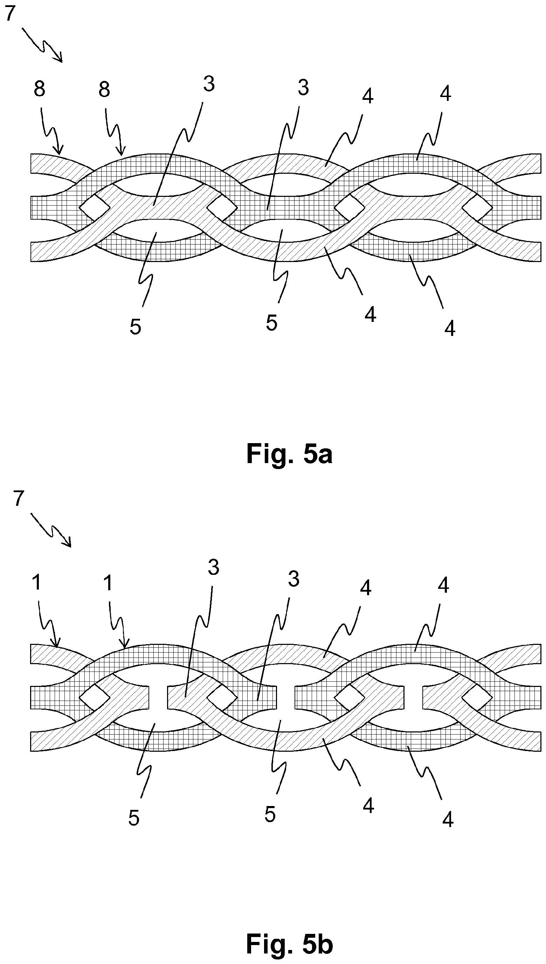

Figur 5a zeigt einen Ausschnitt eines Schlingengebildes 7 mit zwei Ursprungselementen 8. Das Schlingengebilde 7 kann dabei beliebig nach links und/oder rechts fortgesetzt sein. Die Schraffierung der Ursprungselement 8 dient dabei nur der besseren Erkennbarkeit.

Jedes der Ursprungselemente 8 weist eine Abfolge von einem Steg 3, zwei Schenkeln 4, einem Steg 3, zwei Schenkeln 4, usw. auf. Zwischen den Schenkeln 4 werden dabei Schlingen 5 gebildet. Der Übersichtlichkeit halber wurden nicht alle Stege 3, Schenkel 4 und Schlingen 5 mit Bezugszeichen versehen.

Die Schlingen 5 der beiden Ursprungselemente 8 sind dabei so angeordnet, dass sie immer wechselseitig ineinandergreifen. Eine Schlinge 5 eines der Ursprungselemente 8 greift also stets mit zwei benachbarten Schlingen 5 des anderen Ursprungselements 8 ineinander. Diese Struktur ist beispielsweise auf einem Variationsflechter problemlos flechtbar.

Um aus den Ursprungselementen 8 der Figur 5a ein als Gliederkette ausgebildetes Schlingengebilde 7 zu erhalten, werden die Ursprungselemente 8 an ihren Stegen 3 durchtrennt. Es ergibt sich das in Figur 5b gezeigte Schlingengebilde 7, das aus vielen einzelnen Elementen 1 besteht, deren Schlingen 5 wechselseitig ineinandergreifen, so dass eine Gliederkette entsteht.

Nach dem Durchtrennen der Stege 3 können die Stränge an den Enden der Elemente 1 miteinander verbunden werden und die Stege 3 können in die Schenkel 4 hineingestülpt werden.

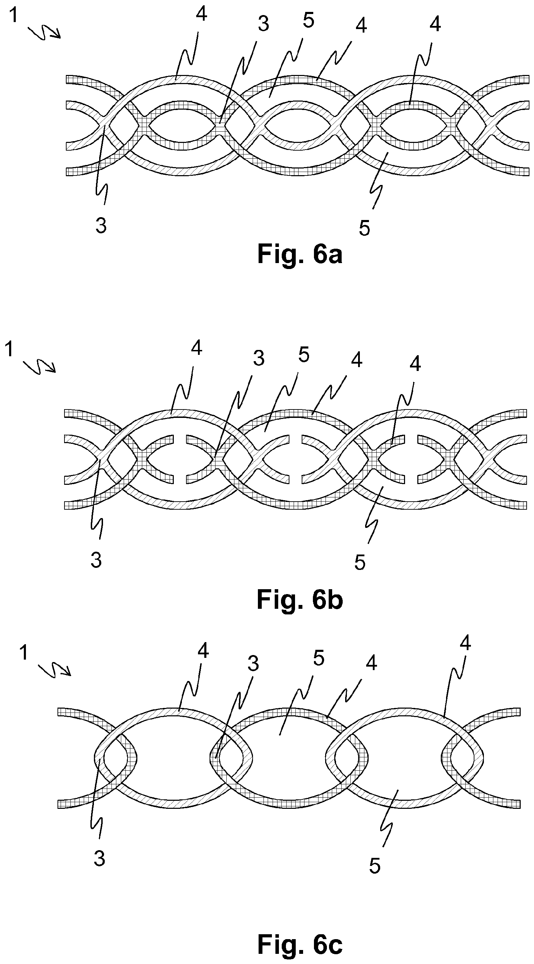

Figur 6a zeigt eine Variante des Ausführungsbeispiels aus Figur 5a. Im Unterschied zum Ausführungsbeispiel der Figur 5a sind hier die Stege 3 sehr kurz gehalten und es sind weitere Schenkel 4 vorgesehen, die Schlingen 5 bilden, die nicht mit anderen Schlingen 5 ineinander greifen.

Um ein als Gliederkette ausgebildetes Schlingengebilde 7 zu erhalten, werden, wie in Figur 6b gezeigt, die Schenkel 4 der Schlingen 5 durchtrennt, die nicht mit anderen Schlingen 5 ineinander greifen.

Werden sodann die freien Schenkel 4 in die schlauchförmigen Schenkel 4 hineingestülpt, dann ergibt sich die in Figur 6c gezeigte Gliederkette.

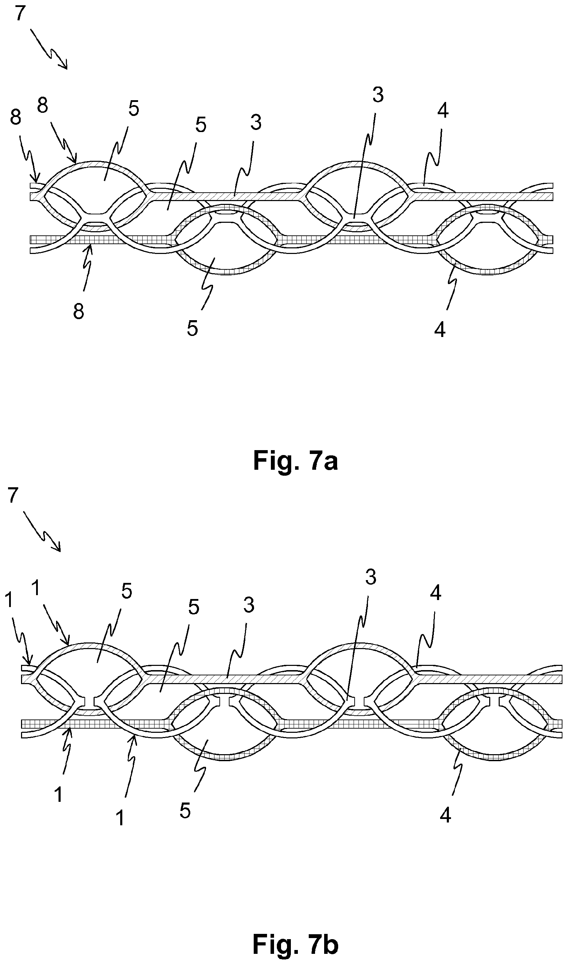

Figur 7a zeigt ein weiteres Ausführungsbeispiel eines Schlingengebildes 7. Dieses Schlingengebilde 7 weist drei Ursprungselemente 8 auf. Dabei sind die Stege 3 der in Figur 7a oben und unten dargestellten Ursprungselemente 8 lang im Vergleich zu den Stegen 3 des mittleren Ursprungselements 8.

Jede Schlinge 5 des mittleren Ursprungselements 8 greift mit je einer Schlinge 5 des oberen und des unteren Ursprungselements 8 ineinander und die Schlingen 5 des oberen und unteren Ursprungselements 8 greifen mit zwei benachbarten Schlingen 5 des mittleren Ursprungselements 8 ineinander.

Es werden nun die Stege 3 des mittleren Ursprungselements 8 durchtrennt. Das mittlere Ursprungselement 8 zerfällt dabei in eine Vielzahl an Elementen 1. Die oberen und unteren Ursprungselemente 8 werden hingegen nicht durchtrennt. Dies ergibt das in Figur 7b gezeigte Schlingengebilde 7. Die oberen und unteren Elemente 1 des Schlingengebildes 7 weisen dabei eine Vielzahl an Schlingen 5 auf, während die mittleren Elemente 1 jeweils nur eine Schlinge 5 aufweisen.

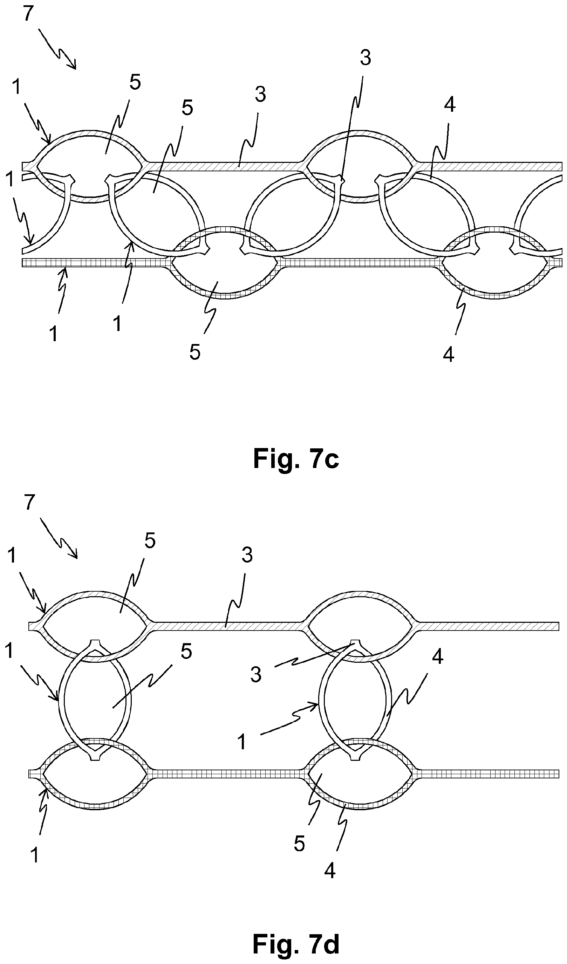

Werden nun, wie in Figur 7c dargestellt, die oberen und unteren Elemente 1 etwas auseinandergezogen, so zeigt sich, dass die oberen und unteren Elemente 1 durch eine Vielzahl von mittleren Elementen 1 zickzackförmig miteinander verbunden sind.

Werden darüber hinaus, wie in Figur 7d dargestellt, jedes zweite der mittleren Element 1 entfernt, so erhält man ein als Strickleiter ausgebildetes Schlingengebilde 7.

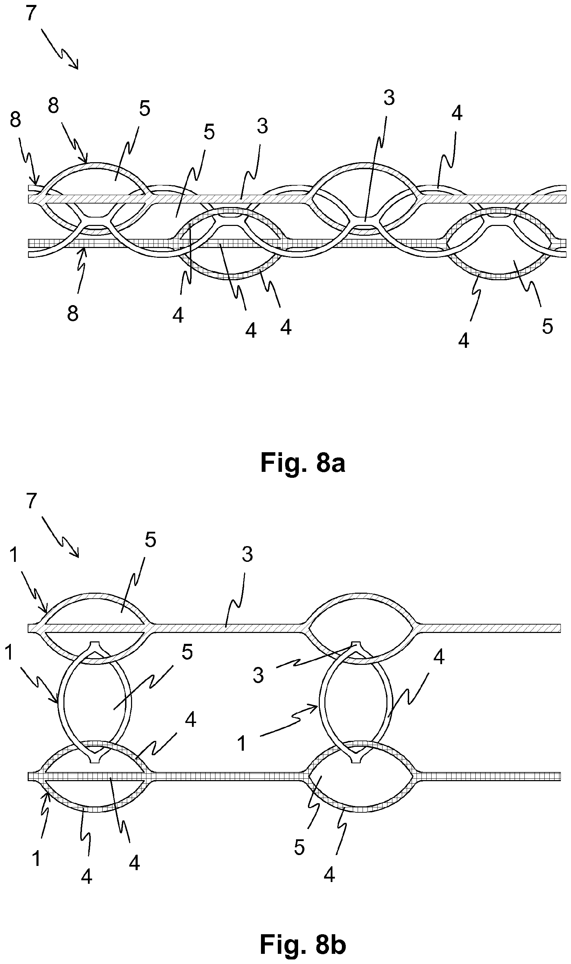

Figur 8a zeigt ein Schlingengebilde 7 mit Ursprungselementen 8, bei denen die Stränge 2 abschnittsweise in drei Teile geteilt sind, so dass sich ein Steg 3 in drei Schenkel 4 teilt.

Nach Durchtrennen der Stege 3 des mittleren Ursprungselements 8 und Entfernen von jedem zweiten der mittleren Elemente 1 erhält man - analog zu Figuren 7a bis 7d - das in Figur 8b gezeigte Schlingengebilde 7. Die extra Schlingen 5 können beispielsweise zum Verbinden des Schlingengebildes 7 mit anderen Bauteilen dienen.

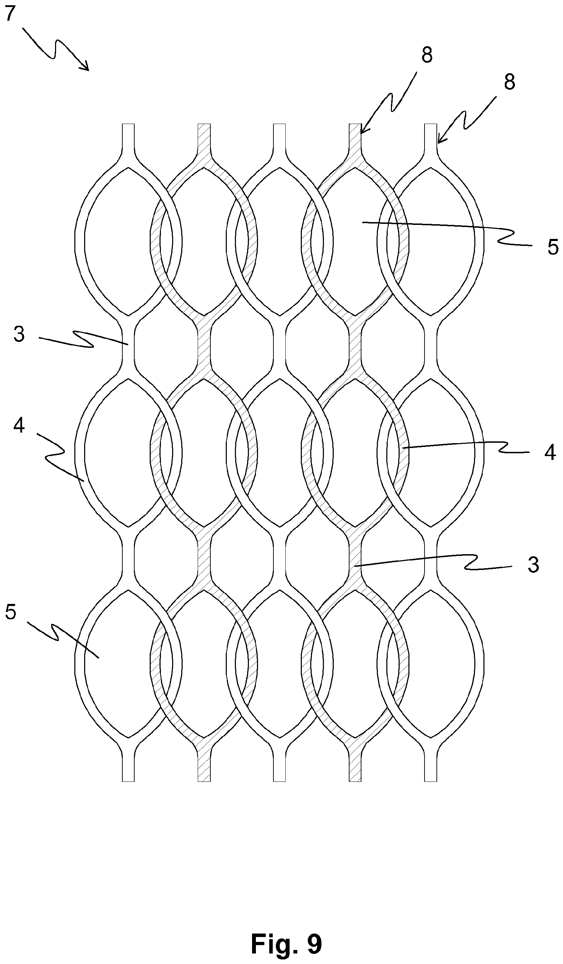

Schließlich zeigt Figur 9 ein weiteres Ausführungsbeispiel eines Schlingengebildes 7. Dieses Schlingengebilde weist fünf Ursprungselemente 8 auf, wobei eine Verallgemeinerung auf eine beliebige Anzahl an Ursprungselementen 8 offensichtlich ist. Ebenso offensichtlich ist es, dass jedes Ursprungselement 8 mehr als die gezeigten drei Schlingen 5 aufweisen kann.

Die Schlingen 5 von jeweils benachbarten Ursprungselementen 8 greifen ineinander, so dass sich eine netzartige Struktur bildet. Das Schlingengebilde 7 ist also ein knotenfreies Netz, das sich zudem sehr platzsparend zusammenlegen lässt.

Im vorliegenden Ausführungsbeispiel werden die Stege 3 der Ursprungselemente 8 nicht durchtrennt. Es ist aber denkbar, dass einige der Stege 3, beispielsweise die Stege 3 von jedem zweiten Ursprungselement 8, durchtrennt werden. Dadurch bleibt das Schlingengebilde 7 ein Netz, hat aber im Vergleich zu einem als Netz ausgebildeten Schlingengebilde 7, bei dem die Stege 3 nicht durchtrennt sind, andere Eigenschaften hinsichtlich Flexibilität, Dehnbarkeit und Maschengröße.

Die vorliegende Erfindung ist nicht auf die dargestellten und beschriebenen Ausführungsbeispiele beschränkt. Insbesondere können durch unterschiedliches Ineinandergreifen von Schlingen eine Vielzahl von Schlingengebilden hergestellt werden. Weitere Abwandlungen, wie eine Kombination der Merkmale, auch wenn diese in unterschiedlichen Ausführungsbeispielen dargestellt und beschrieben sind, sind im Rahmen der Patentansprüche ebenso möglich.

### Bezugszeichenliste

- 1: Element
- 2: Strang
- 3: Steg
- 4: Schenkel
- 5: Schlinge
- 6: Übergangszone
- 7: Schlingengebilde
- 8: Ursprungselement

## Patentansprüche

1. Schlingengebilde aufweisend mindestens zwei Elemente (1), wobei jedes Element (1) mindestens eine Schlinge (5) aufweist, die mit mindestens einer Schlinge (5) eines anderen Elements (1) ineinander greift,
jedes der Elemente (1) mehrere Stränge (2), zumindest teilweise aus biegsamem Material, aufweist,
wobei die Stränge (2) eines Elements (1) zu mindestens zwei in Längsrichtung des Elements (1) voneinander beabstandeten Stegen (3) textilartig verarbeitet, insbesondere verflochten, verwebt, verwirkt und/oder verstrickt, sind,
**dadurch gekennzeichnet, dass**
die Stränge (2) abschnittsweise geteilt sind,
jeder Teil zu einem Schenkel (4) textilartig verarbeitet ist, wobei zumindest zwei Schenkel (4) zwei der Stege (3) miteinander verbinden,
die Schlingen (5) aus den Schenkeln (4) gebildet sind und
zwischen benachbarten Stegen (3) und Schenkeln (4) eine Übergangszone (6) vorgesehen ist, die von einem textilartigen Arbeitsmuster, insbesondere Flechtmuster, Webmuster, Wirkmuster und/oder Strickmuster, der Stege (3) verschieden ist, in der sich aber Stränge (2) der Schenkel (4) überkreuzen und/oder miteinander verbinden.

2. Schlingengebilde nach dem vorherigen Anspruch, **dadurch gekennzeichnet, dass** die Schenkel (4) zu einem Schlauch textilartig gearbeitet sind und vorzugsweise die an den Enden der Elemente (1) befindlichen Stege (3) und/oder Schenkel (4) in einen oder mehrere Schenkel (4) hineingestülpt sind.

3. Schlingengebilde nach einem der vorherigen Ansprüche, **dadurch gekennzeichnet, dass** das Schlingengebilde (7) eine Gliederkette ist und jedes Element (1) genau zwei Stege (3) und mindestens zwei Schenkel (4) aufweist, wobei zwei der Schenkel (4) die Stege (3) miteinander verbinden und eine Schlinge (5) bilden.

4. Schlingengebilde nach einem der vorherigen Ansprüche, **dadurch gekennzeichnet, dass** das Schlingengebilde (7) eine Strickleiter oder ein Netz ist.

5. Verfahren zur Herstellung eines Schlingengebildes (7) nach einem der vorherigen Ansprüche, aus mehreren Strängen (2), zumindest teilweise aus biegsamem Material, zumindest zwei Ursprungselemente (8) textilartig gearbeitet, insbesondere geflochten, gewebt, gewirkt und/oder gestrickt, werden, wobei die Ursprungselemente (8) abwechselnd einen Steg (3), mindestens zwei Schenkel (4) und wieder einen Steg (3) aufweisen, wobei der Steg (3) die dem Ursprungselement (8) zugeordneten Stränge (2) umfasst, **dadurch gekennzeichnet, dass** die Stränge (2) abschnittsweise geteilt sind, wobei die Schenkel (4) jeweils einen Teil der Stränge (2) umfassen, und wobei die Schenkel (4) Schlingen (5) bilden und Schlingen (5) der verschiedenen Ursprungselemente (8) ineinander greifen und zwischen den Stegen (3) und Schenkeln (4) eine Übergangszone (6) textilartig gearbeitet wird, die sich vom textilartigen Arbeitsmuster, insbesondere Flechtmuster, Webmuster, Wirkmuster und/oder Strickmuster, der Stege (3) unterscheidet, in der sich aber Stränge (2) der Schenkel (4) überkreuzen und/oder miteinander verbinden.

6. Verfahren nach dem vorherigen Anspruch, **dadurch gekennzeichnet, dass** einige oder alle Stege (3) und/oder Schenkel (4) der Ursprungselemente (8) durchtrennt, insbesondere durchgeschnitten und/oder durchgeschmolzen, werden um einzelne Elemente (1) des Schlingengebildes (7) zu erhalten.

7. Verfahren nach einem der vorherigen Ansprüche 5 bis 6, **dadurch gekennzeichnet, dass** die Ursprungselemente (8) nach dem textilartigen Arbeiten und vor dem Durchtrennen gestreckt werden.

8. Verfahren nach einem der vorherigen Ansprüche 5 bis 7, **dadurch gekennzeichnet, dass** die Stränge (2) an den Enden der Elemente (1) miteinander verbunden, insbesondere geklebt, verschweißt, verknotet, gespleißt, vernäht und/oder verschmolzen werden.

9. Verfahren nach einem der vorherigen Ansprüche 5 bis 8, **dadurch gekennzeichnet, dass** die Schenkel (4) zu einem Schlauch textilartig gearbeitet werden und vorzugsweise nach dem Durchtrennen der Stege (3) und nach dem Verbinden der Stränge (2) die an den Enden der Elemente (1) befindlichen Stege (3) und/oder Schenkel (4) in einen oder mehrere Schenkel (4) hineingestülpt werden.

10. Verfahren nach einem der vorherigen Ansprüche 5 bis 9, **dadurch gekennzeichnet, dass** genau zwei Ursprungselemente (8) textilartig gearbeitet werden, wobei zumindest einige der Schlingen (5) der Ursprungselemente (8) abwechselnd ineinandergreifen und die Ursprungselemente (8) jeweils zwischen zwei der ineinander greifenden Schlingen (5) getrennt werden, so dass eine Gliederkette entsteht.

11. Verfahren nach einem der vorherigen Ansprüche 5 bis 10, **dadurch gekennzeichnet, dass** die Schlingen (5) von jeweils benachbarten Ursprungselementen (8) ineinandergreifen, so dass sich eine netzartige Struktur bildet.

12. Verfahren nach einem der vorherigen Ansprüche 5 bis 11, **dadurch gekennzeichnet, dass** das textilartige Arbeiten mit einer Schmaltextilien herstellenden Maschine, insbesondere einem Variationsflechter, einem 3D-Flechter, einer Bandwebmaschine, einer Wirkmaschine und/oder einer Strickmaschine, durchgeführt wird.

13. Element, das eine Schlinge (5) aufweist,
das Element (1) mehrere Stränge (2), zumindest teilweise aus biegsamem Material, aufweist,
wobei die Stränge (2) des Elements (1) zu mindestens zwei in Längsrichtung des Elements (1) voneinander beabstandeten Stegen (3) textilartig verarbeitet, insbesondere verflochten, verwebt, verwirkt und/oder verstrickt, sind und
die Stränge (2) abschnittsweise geteilt sind und
jeder Teil zu einem Schenkel (4) textilartig verarbeitet ist, wobei zumindest zwei Schenkel (4) zwei der Stege (3) miteinander verbinden und
die Schlinge (5) aus den Schenkeln (4) gebildet ist, zur Herstellung eines Schlingengebildes gemäß einem der der Ansprüche 1 bis 3, **dadurch gekennzeichnet, dass** zwischen benachbarten Stegen (3) und Schenkeln (4) eine Übergangszone (6) vorgesehen ist, die von einem textilartigen Arbeitsmuster, insbesondere Flechtmuster, Webmuster, Wirkmuster und/oder Strickmuster, der Stege (3) verschieden ist, in der sich aber Stränge (2) der Schenkel (4) überkreuzen und/oder miteinander verbinden.

14. Element nach dem vorherigen Anspruch, **dadurch gekennzeichnet, dass** die Stränge (2) an den Enden der Elemente (1) miteinander verbunden, insbesondere geklebt, verschweißt, verknotet, gespleißt, vernäht und/oder verschmolzen sind.

15. Element nach einem der vorherigen Ansprüche 13 oder 14, **dadurch gekennzeichnet, dass** die Schenkel (4) zu einem Schlauch textilartig gearbeitet sind und vorzugsweise die an den Enden des Elements (1) befindlichen Stege (3) und/oder Schenkel (4) in einen oder mehrere Schenkel (4) hineingestülpt sind.

16. Element nach einem der vorherigen Ansprüche 13 bis 15, **dadurch gekennzeichnet, dass** die Stränge (2) Naturfasern, Kunstfasern, Glasfasern, Kohlefasern, Metallfasern, Kunststoffdrähte und/oder Metalldrähte aufweisen.

## Claims

1. Loop structure comprising at least two elements (1), wherein each element (1) comprises at least one loop (5), which interlocks with at least one loop (5) of an additional element (1),
each of the elements (1) has a multiple number of strands (2), at least partially of flexible material,
wherein the strands (2) of an element (1) are processed in a textile-like manner into at least two webs that are spaced apart from each other in the longitudinal direction of the element (1); in particular, they are braided, woven, knitted and/or enmeshed,
**characterized in that**
the strands (2) are divided into sections,
each part is processed in a textile-like manner into a wing (4), wherein at least two wings (4) connect two of the webs (3) to each other,
the loops (5) are formed from the wings (4) and
a transition zone (6) is provided between adjacent webs (3) and wings (4), which transition zone is different from a textile-like working pattern, in particular a braided pattern, a woven pattern, a knitted pattern and/or an enmeshed pattern, of the webs (3), but in which strands (2) of the wings (4) cross and/or connect with each other.

2. Loop structure according to one of the preceding claims, **characterized in that** the wings (4) are worked in a textile-like manner into a tube, and preferably the webs (3) and/or wings (4) located at the ends of the elements (1) are inverted into one or more wings (4).

3. Loop structure according to one of the preceding claims, **characterized in that** the loop structure (7) is a link chain and each element (1) has exactly two webs (3) and at least two wings (4), wherein two of the wings (4) connect the webs (3) to each other and form a loop (5).

4. Loop structure according to one of the preceding claims, **characterized in that** the loop structure (7) is a rope ladder or a net.

5. Method for producing a loop structure (7) according to one of the preceding claims, from a multiple number of strands (2), at least partially from flexible material, at least two original elements (8) are worked in a textile-like manner, in particular braided, woven, knitted and/or enmeshed, wherein the original elements (8) alternately have a web (3), at least two wings (4) and once again a web (3), wherein the web (3) comprises the strands (2) assigned to the original element (8) **characterized in that** the strands (2) are divided into sections, wherein each of the wings (4) comprises a part of the strands (2), and wherein the wings (4) form loops (5) and loops (5) of the various original elements (8) interlock with each other and a transition zone (6) is worked in a textile-like manner between the webs (3) and wings (4), which transition zone is different from the textile-like working pattern, in particular a braided pattern, a woven pattern, a knitted pattern and/or an enmeshed pattern, of the webs (3), but in which strands (2) of the wings (4) cross and/or connect with each other.

6. Method according to the preceding claim, **characterized in that** some or all of the webs (3) and/or wings (4) of the original elements (8) are severed, in particular cut through and/or melted, in order to obtain individual elements (1) of the loop structure (7).

7. Method according to one of the preceding claims 5 to 6, **characterized in that** the original elements (8) are stretched after the textile-like working and prior to severing.

8. Method according to one of the preceding claims 5 to 7, **characterized in that** the strands (2) at the ends of the elements (1) are connected to each other, in particular glued, welded, knotted, spliced, sewn and/or fused.

9. Method according to one of the preceding claims 5 to 8, **characterized in that** the wings (4) are worked in a textile-like manner into a tube and preferably, after severing the webs (3) and connecting strands (2), the webs (3) and/or wings (4) located at the ends of the elements (1) are inverted into one or more wings (4).

10. Method according to one of the preceding claims 5 to 9, **characterized in that** exactly two original elements (8) are worked in a textile-like manner, wherein at least some of the loops (5) of the original elements (8) interlock alternately and the original elements (8) are each separated between two of the loops (5) that interlock with each other, such that a link chain is formed.

11. Method according to one of the preceding claims 5 to 10, **characterized in that** the loops (5) of the respective adjacent original elements (8) interlock alternately such that a net-like structure is formed.

12. Method according to one of the preceding claims 5 to 11, **characterized in that** the textile-like working is carried out with a machine producing narrow textiles, in particular a variation braider, a 3D braider, a ribbon loom, a warp knitting machine and/or a knitting machine.

13. Element that has a loop (5),
the element (1) has a multiple number of strands (2), at least some of which are made of flexible material,
wherein the strands (2) of an element (1) are processed in a textile-like manner into at least two webs (3) that are spaced apart from each other in the longitudinal direction of the element (1); in particular, they are braided, woven, knitted and/or enmeshed, and
the strands (2) are divided into sections, and
each part is processed in a textile-like manner into a wing (4), wherein at least two wings (4) connect two of the webs (3) to each other, and the loop (5) is formed from the wings (4), for producing a loop structure according to any one of claims 1 to 3,
**characterized in that** a transition zone (6) is provided between adjacent webs (3) and wings (4), which transition zone is different from a textile-like working pattern, in particular a braided pattern, a woven pattern, a knitted pattern and/or an enmeshed pattern, of the webs (3), but in which strands (2) of the wings (4) cross and/or connect with each other.

14. Element according to the preceding claim, **characterized in that** the strands (2) are connected to each other, in particular glued, welded, knotted, spliced, sewn and/or fused, at the ends of the elements (1).

15. Element according to one of the preceding claims 13 or 14, **characterized in that** the wings (4) are worked in a textile-like manner into a tube and preferably the webs (3) and/or wings (4) located at the ends of the element (1) are inverted into one or more wings (4).

16. Element according to one of the preceding claims 13 to 15, **characterized in that** the strands (2) contain natural fibers, synthetic fibers, glass fibers, carbon fibers, metal fibers, plastic wires and/or metal wires.

## Revendications

1. Structure en boucle comprenant au moins deux éléments (1), chaque élément (1) comprenant au moins une boucle (5) qui s'imbrique avec au moins une boucle (5) d'un autre élément (1),
chacun des éléments (1) comprend plusieurs brins (2) au moins partiellement en une matière flexible,
les brins (2) d'un élément (1) étant travaillés à la manière d'un textile, en particulier entrelacés, tissés, maillés et/ou tricotés, en au moins deux âmes (3) espacées l'une de l'autre dans la direction longitudinale de l'élément (1),
**caractérisée en ce que**
les brins (2) sont divisés par sections,
chaque partie est traitée à la manière d'un textile en une branche (4), au moins deux branches (4) reliant entre elles deux des âmes (3),
les boucles (5) sont formées à partir des branches (4) et il est prévu entre des âmes (3) et des branches (4) voisines une zone de transition (6) qui est différente d'un motif de travail de type textile, en particulier d'un motif de tressage, d'un motif de tissage, d'un motif de maillage et/ou d'un motif de tricotage, des âmes (3), mais dans laquelle des brins (2) des branches (4) se croisent et/ou se relient entre eux.

2. Structure en boucle selon la revendication précédente, **caractérisée en ce que** les branches (4) sont travaillées à la manière d'un textile en un tuyau et **en ce que**, de préférence, les âmes (3) et/ou les branches (4) se trouvant aux extrémités des éléments (1) sont enfoncées dans une ou plusieurs branches (4).

3. Structure en boucle selon l'une quelconque des revendications précédentes, **caractérisée en ce que** la structure en boucle (7) est une chaîne à maillons et que chaque élément (1) présente exactement deux âmes (3) et au moins deux branches (4), deux des branches (4) reliant les âmes (3) entre elles et formant une boucle (5).

4. Structure en boucle selon l'une quelconque des revendications précédentes, **caractérisée en ce que** la structure en boucle (7) est une échelle de corde ou un filet.

5. Procédé pour fabriquer une structure en boucle (7) selon l'une quelconque des revendications précédentes, à partir de plusieurs brins (2), au moins partiellement en une matière flexible, au moins deux éléments d'origine (8) étant travaillés à la manière d'un textile, en particulier entrelacés, tissés, maillés et/ou tricotés, les éléments d'origine (8) présentant alternativement une âme (3), au moins deux branches (4) et à nouveau une âme (3), l'âme (3) comprenant les brins (2) associés à l'élément d'origine (8), **caractérisé en ce que** les brins (2) sont divisés par sections, les branches (4) comprenant chacune une partie des brins (2), et les branches (4) formant des boucles (5) et les boucles (5) des différents éléments d'origine (8) s'imbriquant les unes dans les autres, et une zone de transition (6) étant travaillée à la manière d'un textile entre les âmes (3) et les branches (4), qui se distingue du modèle de travail de type textile, en particulier du motif de tressage, du motif de tissage, du motif de maillage et/ou du motif de tricotage, des âmes (3), mais dans laquelle des brins (2) des branches (4) se croisent et/ou se relient entre eux.

6. Procédé selon la revendication précédente, **caractérisé en ce que** certaines ou toutes les âmes (3) et/ou branches (4) des éléments d'origine (8) sont sectionnées, en particulier coupées et/ou fondues, afin de donner des éléments individuels (1) de la structure en boucle (7).

7. Procédé selon l'une quelconque des revendications 5 à 6 précédentes, **caractérisé en ce que** les éléments d'origine (8) sont étirés après le travail de type textile et avant le sectionnement.

8. Procédé selon l'une quelconque des revendications 5 à 7 précédentes, **caractérisé en ce que** les brins (2) sont reliés entre eux aux extrémités des éléments (1), notamment collés, soudés, noué, épissés, cousus et/ou fusionnés.

9. Procédé selon l'une quelconque des revendications 5 à 8 précédentes, **caractérisé en ce que** les branches (4) sont travaillées à la manière d'un textile en un tuyau et **en ce que**, de préférence, après le sectionnement des âmes (3) et après la connexion des brins (2), les âmes (3) et/ou les branches (4) se trouvant aux extrémités des éléments (1) sont enfoncées dans une ou plusieurs branches (4).

10. Procédé selon l'une quelconque des revendications 5 à 9 précédentes, **caractérisé en ce que** deux éléments d'origine (8) exactement sont travaillés à la manière d'un textile, au moins certaines des boucles (5) des éléments d'origine (8) s'imbriquant alternativement les unes dans les autres, et les éléments d'origine (8) étant chacun séparés entre deux des boucles (5) s'imbriquant les unes dans les autres, de manière à former une chaîne à maillons.

11. Procédé selon l'une quelconque des revendications 5 à 10 précédentes, **caractérisé en ce que** les boucles (5) d'éléments d'origine (8) respectivement adjacents s'imbriquent les unes dans les autres de manière à former une structure de type filet.

12. Procédé selon l'une quelconque des revendications 5 à 11 précédentes, **caractérisé en ce que** le travail de type textile est réalisé avec une machine produisant des textiles étroits, en particulier une tresse à variation, une tresse 3D, un métier à tisser des rubans, une machine à mailler et/ou une machine à tricoter.

13. Élément comprenant une boucle (5),
l'élément (1) comprenant plusieurs brins (2) au moins partiellement en une matière flexible,
les brins (2) de l'élément (1) étant travaillés à la manière d'un textile, en particulier entrelacés, tissés, maillés et/ou tricotés, en au moins deux âmes (3) espacées l'une de l'autre dans la direction longitudinale de l'élément (1), et
les brins (2) étant divisés par sections et
chaque partie est traitée à la manière d'un textile en une branche (4), au moins deux branches (4) reliant entre elles deux des âmes (3) et la boucle (5) est formée à partir des branches (4) pour former une structure en boucle selon l'une quelconque des revendications 1 à 3, **caractérisé en ce qu'**il est prévu entre des âmes (3) et des branches (4) voisines une zone de transition (6) qui est différente d'un motif de travail de type textile, en particulier d'un motif de tressage, d'un motif de tissage, d'un motif de maillage et/ou d'un motif de tricotage, des âmes (3), mais dans laquelle des brins (2) des branches (4) se croisent et/ou se relient entre eux.

14. Élément selon la revendication précédente, **caractérisé en ce que** les brins (2) sont reliés entre eux aux extrémités des éléments (1), notamment collés, soudés, noué, épissés, cousus et/ou fusionnés.

15. Élément selon l'une quelconque des revendications 13 ou 14 précédentes, **caractérisé en ce que** les branches (4) sont travaillées à la manière d'un textile en un tuyau et **en ce que**, de préférence, les âmes (3) et/ou les branches (4) se trouvant aux extrémités de l'élément (1) sont enfoncées dans une ou plusieurs branches (4).

16. Élément selon l'une quelconque des revendications 13 à 15 précédentes, **caractérisé en ce que** les brins (2) comprennent des fibres naturelles, des fibres synthétiques, des fibres de verre, des fibres de carbone, des fibres métalliques, des fils plastiques et/ou des fils métalliques.
